# EUROPEAN PATENT SPECIFICATION

(11) **EP 1 085 040 B1**
(45) Date of publication and mention of the grant of the patent: **17.11.2004**
(21) Application number: 99118001.9
(22) Date of filing: 20.09.1999
(51) Int. Cl.: C08J 9/14, C08J 9/30, C08G 18/28, C08L 75/04

(54) **Process for the preparation of polyurethane and/or polyurea foam**
Verfahren zur Herstellung von Polyurethan- oder Polyharnstoff-Schaumstoff
Procédé de préparation de mousse de polyuréthane ou de polyurée

(43) Date of publication of application: 21.03.2001
(73) Proprietor: Dow Global Technologies Inc., Midland, Michigan 48674 (US)
(72) Inventor: Strietholt, Wilhelm Alexander, Dr., Carl Stolcke Strasse 1, 49090 Osnabrück (DE)
(74) Representative: Raynor, John

(56) References cited:
- EP-A- 0 463 479
- EP-A- 0 824 123

## Description

The present invention relates to a process for the production of shaped bodies made of self-skinning polyurethane and/or polyurea foam.

More specifically, the present invention relates to a process for the production of shaped bodies made of self-skinning polyurethane and/or polyurea foam obtained without expanding or blowing agents of a chlorofluoroalkanic nature.

The phrase "self-skinning foam" is a term of the art and should be understood by those skilled in the art. By self-skinning foam it is essentially meant that the foam composition causes the skin formation at the surface of the molded product which is highly desirable for a number of different applications.

The term "shaped bodies", as used in the present invention and claims, refers to end-articles made of expanded polymers based on urethane/urea groups covered with a thin, integral layer of compact urethane polymer. Examples of these end-articles are: internal car components such as head-rests, transmission tunnel covers, dashboards, internal side door-panels, steering-wheel covers, gear-stick knobs, etc. or saddles for bicycles or motor-cycles, seats for furnishing or transport vehicles, chair-arms, frameworks for household appliances or electronic equipment, boxes for electrical components, window-frames, furniture components, etc.

The method for preparing articles made of self-skinning expanded polyurethane is well known by all those operating in this field.

This technique involves charging a mixture consisting of polyurethane reagents to which an expanding or blowing agent (in the present invention designated as "blowing agent"), polymerization catalyst and further additives such as cell regulators, stabilizers, etc. have been added, into a mould maintained at a preset temperature.

The blowing agent essentially consists of chemical compounds of a chlorofluoroalkanic nature (CFC) which have a boiling/condensation temperature ranging from 20 to 60°C.

During the polymerization, as a result of the reaction heat, the CFC evaporate acting as blowing agents for the reactive polyurethane mixture. When the latter comes into contact with the "cold" walls of the mould, the CFC condense owing to the temperature and also to the compression exerted onto the walls by the expanded resin. The polyurethane resin which is in contact with the walls of the mould, is therefore in compact form.

The article which is extracted from the mould consequently consists of an internal mass with a cellular structure coated, with total adhesion, by a compact skin having a thickness of not more than a few millimetres.

Although the method described above does not have problems of a technical nature, it is characterized by the disadvantage of having to use, as blowing agent, gases of a chlorofluoroalkanic nature such as CFC which are known to have a harmful effect on the environment as they contribute to modifying and destroying the ozone layer present in the stratosphere.

As agreements favouring the progressive reduction in the production of CFC have been reached on an international scale, the necessity is strongly felt for setting up methods which enable these products to be substituted with others which are less harmful for the environment. For example, the English patent 2,325,468 describes a process for the preparation of self-skinning polyurethane foams which comprises reacting an isocyanic component with a polyol component in the presence of a blowing system, which does not contain CFC, consisting of water and at least one tertiary alcohol.

The Applicant has now found a further process which allows the preparation of articles made of self-skinning expanded polyurethanes which does not require the use of CFC as blowing agent and allows to make use of an reduced amount of the tertiary alcohol.

The present invention therefore relates to a process for the production of shaped bodies made of self-skinning polyurethane and/or polyurea foam which comprises reacting in a closed mould a reactive composition consisting of an isocyanic component, a polyol component and a blowing system essentially consisting of water, in quantities ranging from 0 to 0.4% by weight, preferably from 0.01 to 0.2% by weight, a tertiary alcohol, in quantities of less than 5% by weight, preferably from 1 to 3% by weight, and tetrafluoroethane in quantities ranging from 2 to 4% by weight, preferably from 2 to 3.5% by weight, said percentages being calculated with respect to the total weight of the polyol component.

The polyurethane and/or polyurea foams obtained with the process of the present invention can be either of the flexible or rigid type and have a density ranging from 200 to 600 Kg/m³. The articles extracted from the mould therefore have a compact external surface which covers and continuously adheres to the internal body with a cellular structure. The thickness of the compact layer generally ranges from 0.3 to 5 mm.

The isocyanic component of the present invention, essentially consists of at least one isocyanate with an isocyanic functionality equal to or higher than 2. Any organic polyisocyanate capable of giving polyurethane and/or polyurea resins can be used in the embodiment of the present invention even if aliphatic, cycloaliphatic, aromatic polyisocyanates and the corresponding alkyl substituted derivatives, are preferred.

In particular, diisocyanates with a low or medium molecular weight having general formula (I), can be used:

OCN-R-NCO (I)

wherein R represents a C₁-C₁₂ aliphatic, C₅-C₂₅ cycloaliphatic or C₆-C₁₈ aromatic radical, optionally substituted with C₁-C₄ alkyls such as 2,2,4-trimethylhexamethylene diisocyanate, ethylidene diisocyanate, butylene diisocyanate, hexamethylene diisocyanate, cyclohexylene-1,4-diisocyanate, cyclohexylene-1,2-diisocyanate, dichlorohexamethylene diisocyanate, xylylene diisocyanate, meta- and/or para-phenylene diisocyanate, naphthalene-1,5-diisocyanate, 1-methoxyphenyl-2,4-diisocyanate, 4,4'-diphenylene diisocyanate, 3,3'-dimethyl-4,4'diphenylene diisocyanate, 2,4-toluene diisocyanate, either alone or mixed with the isomer 2,6-toluene diisocyanate, 4,4'-diphenylmethane diisocyanate, optionally mixed with the 2,4'isomer, 4,4'-dicyclohexylmethane diisocyanate, 1-isocyanate-3-isocyanatemethyl-3,3,5-trimethylcyclohexane, etc.

Preferred diisocyanates having general formula (I) are 4,4'-diphenylmethane diisocyanate (MDI) alone or mixed with at least 5% by weight of 2,4' isomer.

Alternatively, polyisocyanates can be used, with a high molecular weight, with varying condensation degrees, obtained by the phosgenation of anilineformaldehyde condensates. These products consist of mixtures of polymethylene polyphenylene polyisocyanates having general formula (II): 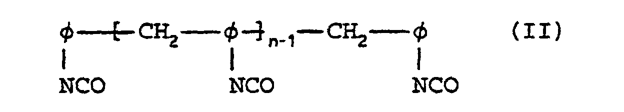 wherein φ represents a phenyl group and n is an integer greater than or equal to 1.

Preferred polyisocyanates with a high molecular weight of the present invention are polymethylene polyphenylene polyisocyanates with an average functionality ranging from 2.6 to 2.8. These products are available on the market under various trade-names such as "TEDIMON 31" (Enichem S.p.A.), "SUPRASEC DNR" (ICI) or DESMODUR 44 V20 (Bayer).

Further examples of polyisocyanates which can be used in the process of the present invention are modified polyisocyanates, i.e. containing urethonimine and/or carbodiimide groups or containing allophanate or biuret groups and isocyanic prepolymers obtained by the reaction of polyisocyanates having formula (I) or (II), optionally modified as above, with an equivalent defect of polyol polyethers and/or polyesters, having a hydroxyl or amine functionality of at least 2 and with an average molecular weight ranging from 500 to 8,000.

The polyol component comprises at least one polyol polyether and a chain-extending and/or cross-linking agent with a hydroxyl or amine functionality.

The polyol polyether essentially consists of a product having an average molecular weight ranging from 300 to 8,000 with a hydroxyl or amine functionality of at least 2, obtained by the condensation of at least one alkylene oxide, wherein the alkylene group contains from 2 to 6 carbon atoms, on starters having at least two active hydrogen atoms, generally 2-8 active hydrogen atoms.

Examples of alkylene oxides to be preferably used in the process of the present invention are ethylene oxide, propylene oxide or mixtures of ethylene oxide and propylene oxide containing ethylene oxide in a quantity of less than 70% by weight, preferably between 1 and 50%. Examples of starters are glycols, triols, tetrols, etc. amines, alkanolamines and polyamines or their mixtures such as: dipropyleneglycol; 1,4-butyleneglycol; glycerine; trimethylolpropane; pentaerythritol; ethylenediamine; triethanolamine; or a polyfunctional hydroxy alkane such as xylitol, arabitol, sorbitol, mannitol, etc.

The polyol polyethers can be used as such or they can contain in dispersion or partially grafted to the polyol chains, solid particles, preferably polymeric, with dimensions of less than 200 micrometres. Polymers suitable for this purpose are: polyacrylonitrile, polystyrene, polyvinylchloride, etc. or their mixtures or their copolymers such as styrene-acrylonitrile polymers or polymers based on urea. These solid particles can be prepared by polymerization in situ in the polyol or they can be prepared apart and subsequently added to the polyol.

The chain extending and/or cross-linking agent, with a hydroxyl or amine functionality greater than or equal to two, is a product with a low molecular weight and is selected from the products previously indicated as starters in the preparation of polyols with a high molecular weight. Preferred chain-extending and/or cross-linking agents of the present invention are ethylene glycol, diethylene glycol, propylene glycol and 1,4-butyleneglycol.

The blowing system, generally predissolved in the polyol component, involves the possible use of water preferably in quantities ranging from 0.01 to 0.2% by weight with respect to the total weight of the polyol component. Due to the presence of water and its reaction with the isocyanic component, there is the development of carbon dioxide which contributes to the expansion process of the polyurethane resin.

Any tertiary alcohol can be used in the process of the present invention as blowing agent. However ter-butanol is preferred for its availability and low cost.

The polyol composition generally also comprises according to the industrial standard and requirements further additives commonly used in the preparation of polyurethane foams such as amine catalysts, for example triethylenediamine, and/or metal catalysts such as stannous octoate, cell regulators, surfactants, flame-retardant agents, plasticizers, organic and inorganic fillers, thermo-oxidation stabilizers, pigments, etc. Details on the polymerization of polyurethanes are described in the text "Saunders & Frisch - Polyurethanes, Chemistry and Technology" Interscience, New York, 1964.

The process conditions, under which the process of the invention is carried out, are usual ones for the production of shaped bodies made of self-skinning polyurethane and/or polyurea foams corresponding to the industrial standard and well-known to the skilled person.

Some illustrative but non-limiting examples are provided for a better understanding of the present invention.

In the examples, the quantities of the various components of the formulations are expressed as parts by weight.

### EXAMPLE 1

### Isocyanic Component

45 parts of polymethylene polyphenylene polyisocyanate with an average functionality of 2.4, available on the market as TEDIMON 330.

### Polyol Component

70.4 parts of a polyol polyether having a functionality of 3 and average molecular weight of 6,000, based on propylene oxide and terminated with ethylene oxide (TERCAROL 427 of ENICHEM S.p.A.);
6.5 parts of a polyol polyether having a functionality of 3 and an average molecular weight of 4,000 based on propylene oxide and terminated with ethylene oxide (ARCOL 2580 of ARCO);
15 parts of a polyol polyether having a functionality of 3 and average molecular weight of 4,800 based on propylene oxide and terminated with ethylene oxide grafted with a Styrene-Acrylonitrile polymer, SAN, (TERCAROL 5923 of ENICHEM S.p.A.);
1.9 parts of diethylene glycol;
6.5 parts of monoethylene glycol;
0.2 parts of catalyst DABCO DC1;
0.8 parts of catalyst DABCO 33LV.

The blowing system consisting of 0.1% by weight, with respect to the total polyol component, of water, 3.2% by weight of tetrafluoroethane and 1.5% by weight of ter-butanol, is added to the polyol component.

The isocyanic component and polyol component were premixed in a stirred device and then 640 g of the reactive polyurethane system thus obtained were charged into a parallelepiped-shaped mould preheated to 45°C. At the end of the polymerization the mould was opened and an article was extracted whose external surface was compact without surface defects.

The moulded article was then cut into two. Inside it consisted of a uniform cellular structure made of a rigid material which adhered perfectly to the external compact layer with an average thickness of about 2.5 mm.

### EXAMPLE 2

### Isocyanic Component

35 parts of TEDIMON 330.

### Polyol Component

70.4 parts of a polyol polyether having a functionality of 3 and average molecular weight of 6,000, based on propylene oxide and terminated with ethylene oxide (TERCAROL 427 of ENICHEM S.p.A.);
5.0 parts of a polyol polyether having a functionality of 3 and an average molecular weight of 4,000 based on propylene oxide and terminated with ethylene oxide (ARCOL 2580 of ARCO);
15 parts of a polyol polyether having a functionality of 3 and average molecular weight of 4,800 based on propylene oxide and terminated with ethylene oxide grafted with a Styrene- Acrylonitrile polymer, SAN, (TERCAROL 5923 of ENICHEM S.p.A.);
1.4 parts of diethylene glycol;
5.0 parts of monoethylene glycol;
0.2 parts of catalyst DABCO BL11;
0.2 parts of catalyst DABCO DC1;
1.0 parts of catalyst DABCO 33LV.

The blowing system consisting of 0.1% by weight, with respect to the total polyol component, of water, 3.2% by weight of tetrafluoroethane and 1.5% by weight of ter-butanol, is added to the polyol component.

The isocyanic component and polyol component were premixed in a stirred device and then 640 g of the reactive polyurethane system thus obtained were charged into a parallelepiped-shaped mould preheated to 45°C. At the end of the polymerization the mould was opened and an article was extracted whose external surface was compact without surface defects.

The moulded article was then cut into two. Inside it consisted of a uniform cellular structure made of a flexible material which adhered perfectly to the external compact layer with an average thickness of about 2 mm.

### EXAMPLE 3

### Isocyanic Component

35 parts of TEDIMON 330.

### Polyol Component

70.4 parts of a polyol polyether having a functionality of 3 and average molecular weight of 6,000, based on propylene oxide and terminated with ethylene oxide (TERCAROL 427 of ENICHEM S.p.A.);
6.5 parts of a polyol polyether having a functionality of 3 and an average molecular weight of 4,000 based on propylene oxide and terminated with ethylene oxide (ARCOL 2580 of ARCO);
15 parts of a polyol polyether having a functionality of 3 and average molecular weight of 4,800 based on propylene oxide and terminated with ethylene oxide grafted with a Styrene-Acrylonitrile polymer, SAN, (TERCAROL 5923 of ENICHEM S.p.A.);
1.4 parts of diethylene glycol;
5.0 parts of monoethylene glycol;
0.2 parts of catalyst DABCO BL11;
0.2 parts of catalyst DABCO DC1;
1.0 parts of catalyst DABCO 33LV.

The blowing system consisting of 0.1% by weight, with respect to the total polyol component, of water, 2% by weight of tetrafluoroethane and 1.5% by weight of ter-butanol, is added to the polyol component.

The same procedure is then adopted as in the previous examples. An article is obtained, made of flexible polyurethane foam covered with an integrated skin having an average thickness of about 1.5 mm.

### EXAMPLE 4 (Comparative)

### Isocyanic Component

35 parts of TEDIMON 330.

### Polyol Component

78.0 parts of a polyol polyether having a functionality of 3 and average molecular weight of 6,000, based on propylene oxide and terminated with ethylene oxide (TERCAROL 427 of ENICHEM S.p.A.);
15 parts of a polyol polyether having a functionality of 3 and average molecular weight of 4,800 based on propylene oxide and terminated with ethylene oxide grafted with a Styrene-Acrylonitrile polymer, SAN, (TERCAROL 5923 of ENICHEM S.p.A.);
5.8 parts of monoethylene glycol;
0.2 parts of catalyst DABCO BL11;
0.1 parts of catalyst DABCO DC1;
0.9 parts of catalyst DABCO 33LV.

The blowing system consisting of 5.5% by weight, with respect to the total polyol component, of pentane, is added to the polyol component.

The same procedure is then adopted as in the previous examples. An article is obtained, made of flexible polyurethane foam whose external surface is not compact but has evident defects.

### EXAMPLE 5 (Comparative)

### Isocyanic Component

35 parts of TEDIMON 330.

### Polyol Component

58.1 parts of a polyol polyether having a functionality of 3 and average molecular weight of 6,000, based on propylene oxide and terminated with ethylene oxide (TERCAROL 427 of ENICHEM S.p.A.);
3.5 parts of a polyol polyether having a functionality of 3 and an average molecular weight of 4,000 based on propylene oxide and terminated with ethylene oxide (ARCOL 2580 of ARCO);
20 parts of a polyol polyether having a functionality of 3 and average molecular weight of 4,800 based on propylene oxide and terminated with ethylene oxide grafted with a Styrene- Acrylonitrile polymer, SAN, (TERCAROL 5923 of ENICHEM S.p.A.);
2.3 parts of diethylene glycol;
7.1 parts of monoethylene glycol;
1.3 parts of catalyst DABCO 33 33LV;
0.7 parts of catalyst SBF 2.

The blowing system consisting of 0.4% by weight, with respect to the total polyol component, of water, is added to the polyol component.

The same procedure is then adopted as in the previous examples. An article is obtained, made of flexible polyurethane foam whose external surface is not compact but has evident defects.

### EXAMPLE 6 (Comparative)

### Isocyanic Component

35 parts of TEDIMON 330.

### Polyol Component

68.9 parts of a polyol polyether having a functionality of 3 and average molecular weight of 6,000, based on propylene oxide and terminated with ethylene oxide (TERCAROL 427 of ENICHEM S.p.A.);
6.5 parts of a polyol polyether having a functionality of 3 and an average molecular weight of 4,000 based on propylene oxide and terminated with ethylene oxide (ARCOL 2580 of ARCO);
7 parts of monoethylene glycol;
1.3 parts of catalyst DABCO 33LV;

The blowing system consisting of 14% by weight, with respect to the total polyol component, of 1,1-dichloro-1-fluoro ethane (141 B), is added to the polyol component.

The same procedure is then adopted as in the previous examples. An article is obtained, made of flexible polyurethane foam whose external surface is not compact but has evident defects.

### EXAMPLE 7 (Comparative)

### Isocyanic Component

45 parts of polymethylene polyphenylene polyisocynate with an average functionality of 2,4, available on the market as TEDIMON 330.

### Polyol Component

70.4 parts of a polyol polyether having a functionality of 3 and average molecular weight of 6,000, based on propylene oxide and terminated with ethylene oxide (TERCAROL 427 of ENICHEM S.p.A.);
6.5 parts of a polyol polyether having a functionality of 3 and an average molecular weight of 4,000 based on propylene oxide and terminated with ethylene oxide (ARCOL 2580 of ARCO);
15 parts of a polyol polyether having a functionality of 3 and an average molecular weight of 4,800 based on propylene oxide and terminated with ethylene oxide grafted with a Styrene-Acryonitrile polymer, SAN, (TERCAROL 5923 of ENICHEM S.p.A.);
1.9 parts of diethylene glycol;
6.5 parts of monoethylene glycol;
0.2 parts of catalyst DABCO DC1;
0.8 parts of catalyst DABCO 33LV;

The blowing system consisting of 0.1% by weight, with respect to the total polyol component, of water, and 1.5% by weight of ter-butanol, is added to the polyol component.

The isocyanic component and polyol component were premixed in a stirred device and then 640 g of the reactive polyurethane system thus obtained were charged into a parallelepiped-shaped mould preheated to 45°C. At the end of the polymerization the mould was opened and an article was extracted whose external surface had no sign of densification.

## Claims

1. A process for the production of shaped bodies made of self-skinning polyurethane and/or polyurea foam which comprises reacting in a closed mould, a reactive composition based on an isocyanic component, a polyol component and a blowing system comprising a tertiary alcohol, in a quantity of less than 5% by weight, and tetrafluoroethane in quantities ranging from 2 to 4% by weight, said percentages being calculated with respect to the total polyol component.

2. The process according to claim 1, wherein the blowing system comprises water in a quantity ranging from 0.01 to 0.4% by weight.

3. The process according to claim 1 or 2, wherein the tertiary alcohol is ter-butanol.

## Patentansprüche

1. Verfahren zur Herstellung von Formkörpern aus Polyurethan- und/oder Polyharnstoff-Schaum, der eine Oberflächenhaut bildet, das umfasst das Reagierenlassen einer reaktionsfähigen Zusammensetzung auf Basis einer Isocyansäure-Komponente, mit einer Polyol-Komponente und einem Treibmittelsystem, das umfasst einen tertiären Alkohol in einer Menge von weniger als 5 Gew.-%, und Tetrafluorethan in einer Menge in dem Bereich von 2 bis 4 Gew.-%, jeweils bezogen auf das Gesamtgewicht der Polyol-Komponente, in einer geschlossenen Form.

2. Verfahren nach Anspruch 1, worin das Treibmittelsystem Wasser in einer Menge in dem Bereich von 0,01 bis 0,4 Gew.-% umfasst.

3. Verfahren nach Anspruch 1 oder 2, worin der tertiäre Alkohol tert.-Butanol ist.

## Revendications

1. Procédé pour la production de corps formés faits de mousse à peau intégrale de polyuréthane et/ou de polyurée qui consiste à faire réagir dans un moule fermé, une composition réactive à base d'un composant isocyanique, d'un composant polyol et d'un système de soufflage comprenant un alcool tertiaire, dans une quantité inférieure à 5 % en poids, et le tétrafluoroéthane dans des quantités comprises dans une plage allant de 2 à 4 % en poids, lesdits pourcentages étant calculés par rapport au poids total du composant polyol.

2. Procédé selon la revendication 1, dans lequel le système de soufflage comprend de l'eau dans une quantité comprise dans une plage allant de 0,01 à 0,4 % en poids.

3. Procédé selon la revendication 1 ou 2, dans lequel l'alcool tertiaire est le tert-butanol.
